# EUROPEAN PATENT APPLICATION

(11) **EP 4 209 338 A1**
(43) Date of publication of application: **12.07.2023**
(21) Application number: 22216877.5
(22) Date of filing: 28.12.2022
(51) Int. Cl.: B32B 1/08, B32B 7/12, B32B 27/08, B32B 27/34

(54) **A HIGH TEMPERATURE MULTI-LAYER COOLANT TUBE**

(30) Priority: 10.01.2022 US 202263297989 P
(71) Applicant: Cooper-Standard Automotive, Inc., Northville, MI 48168 (US)
(72) Inventor: ZHANG, Yingping, Northville (US); NIE, Tao, Northville (US)
(74) Representative: Kilner, Matthew Simon

(57) **Abstract**

The present disclosure comprises a multi-layer tube that withstands temperatures up to 135C in glycol heating and cooling systems for electrical, hybrid or internal combustion vehicles. The materials are chosen for their combination of resistance to permeation and coolant resistance. The thermoplastic material is selected to facilitate extrusion and provide a low cost, robust multi-layer tube for any high temperature glycol cooling system applications.

## Description

### FIELD

The present disclosure relates to a tube for use in a motor vehicle heating and cooling system. More particularly, the present disclosure relates to a multi-layer tube for fluid transfer that provides a balance of properties including ability to withstand high temperatures in these heating and cooling systems.

### BACKGROUND

Single and multi-layer tubes of synthetic materials such as plastics and elastomers have been proposed for heating and cooling lines. These materials need to be able to provide a necessary combination of properties.

It is important that a coolant or heating tube be constructed of material that provides a barrier against liquid diffusion. Additionally, because the tube may carry coolant at low temperatures it must be able to withstand cold temperatures as well as gravel impact without breaking at low temperatures. Furthermore, the coolant may be transported at higher pressures in the cooling system, so the tube must have an adequate burst pressure strength and hoop strength. In addition, the tube needs to be able to withstand the temperatures and pressures of liquids heated in the engine which are removing heat from the engine.

While there have been multi-layer tubes comprising a variety of materials, there has been a lack of any products that have met the necessary combination of properties. These include the inability to operate under the full range of needed temperatures, high costs, and deficiency in permeation properties. While there are some known materials that succeed at a midrange of temperatures, none of those combinations are effective at the temperatures described herein.

In general, the most successful multi-layer tubes have been co-extruded employing an outer layer composed of a material resistant to the exterior environment. The innermost layer is composed of a material which is chosen for its ability to block diffusion of coolant, low cost and long-term serviceability. The middle layer or layers provide the needed flexibility as well as light weight and reduced cost.

It is an objective to provide a low-cost, high temperature resistant multi-layer tube that will transport fluids especially in a motor vehicle.

### SUMMARY

The present disclosure comprises a multi-layer tube that is intended for use in high temperature cooling and heating systems. The multi-layer tube comprises materials that are selected to provide balanced performance of resistance to permeation and coolant resistance at high temperatures. These materials need to provide the required burst strength yet be of light weight, flexible and cost effective. The temperatures that need to be withstood include -40-130°C in continuous operation and 135°C peak temperatures at 4.0 bar maximum pressures. The tubing may range in diameter from 6 mm inner diameter to 50 mm inner diameter with a total wall thickness of 1 mm to 6 mm. The tubing may be in smooth bore or a corrugated surface. Among the materials that may be used are an inner layer comprising a thermoplastic material, an intermediate layer comprising an aliphatic polyamide and an outer layer comprising a thermoplastic material. The outer layer is more particularly an aromatic polyamide PPA such as 6T or 9T, the middle layer an aliphatic polyamide such as PA 612 and the inner layer either an aromatic polyamide PPA (6T or 9T) or a thermoplastic elastomer such as TPV. The multilayer tubes may be used in a variety of motor vehicles heating and cooling systems including electric, hybrid and internal combustion vehicles.

### BRIEF DESCRIPTION OF THE DRAWING

One or more exemplary embodiments of the present invention will be described below in conjunction with the following drawing figure, in which:
FIG. 1 is a sectional view of a tube having two layers according to the present disclosure;
FIG. 2 is a sectional view of a tube having three layers according to the present invention where the middle layer is an aliphatic polyamide;
FIG. 3 is a sectional view of a tube having three layers where the inner layer is a thermoplastic elastomer;
FIG. 4 is a sectional view of a tube having three layers where the middle layer is an adhesive;
FIG. 5 is a sectional view of a tube having four layers where one middle layer is an adhesive and a second middle layer is an aliphatic polyamide;

### DETAILED DESCRIPTION

Five particular combinations of layers in multilayer tubing are disclosed that have a balance performance of permeation and coolant resistance at high temperature, burst strength, light weight, flexibility and lowered cost. These combinations provide for high temperature coolant line applications in all types of motor vehicles including electrical, hybrid or internal combustion engines. These meet the required 130°C maximum continuous temperature and 135C peak temperature for a cooling system of 4.0 bar maximum pressure.

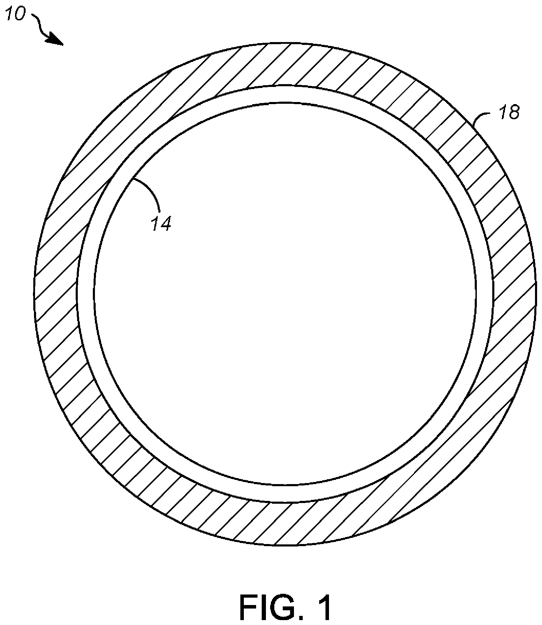

The present disclosure is a multi-layer tube 10 shown in FIG. 1. The tube 10 has at least an inner or first layer 14 and at least a second or outer layer 18. The tube 10 is, preferably, fabricated by co-extruding thermoplastic materials in a conventional coextrusion process. The tube 10 of the present disclosure may have an inner diameter of about 5 mm to about 50 mm. The total wall thickness may be from 0.9 to about 7 mm, suitably about 1 to about 6 mm, and preferably from 1 to about 5 mm. The tube may also have a smooth bore or a corrugated surface. The outer layer may be an aliphatic polyamide and the inner layer an aromatic polyamide PPA (6T or 9T). This construction utilizes the excellent coolant resistance property of aromatic polyamide as the inner layer and the overall excellent high temperature resistance of the inner and outer layers.

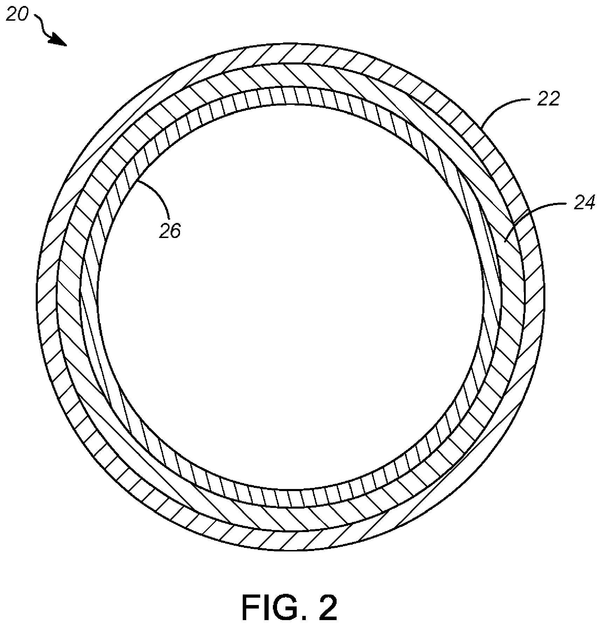

The multi-layer tube 20 in Fig. 2 is shown as a three-layer tube having an outer layer 22 of an aromatic polyamide PPA 6T or 9T, a middle layer 24 of an aliphatic polyamide such as PA 612 and an inner layer 26 of an aromatic PPA 6T or 9T like outer layer 22. This construction utilizes the excellent coolant resistance properties and excellent high temperature resistance of the aromatic polyamide as the inner and outer layers while the aliphatic polyamide intermediate layer helps to reduce the overall material cost of the tube.

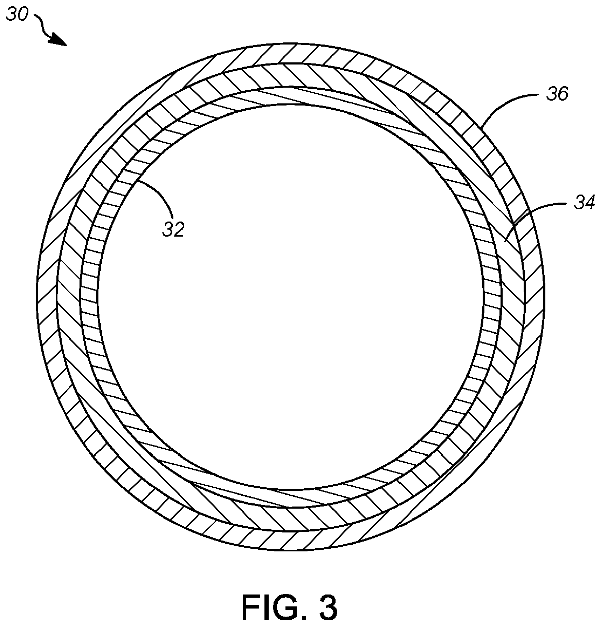

The multi-layer tube 30 in Fig. 3 is shown as a three-layer tube having an outer layer 36 of an aromatic polyamide such as PPA (6T or 9T), a middle layer 34 of an aliphatic polyamide and an inner layer 32 of a thermoplastic elastomer TPV. This construction utilizes the excellent coolant barrier property of TPV as an inner layer and the excellent high temperature resistance of PPA (6T or 9T) as an outer layer. The middle or intermediate layer 36 of aliphatic polyamide is used to improve adhesion and reduce material costs.

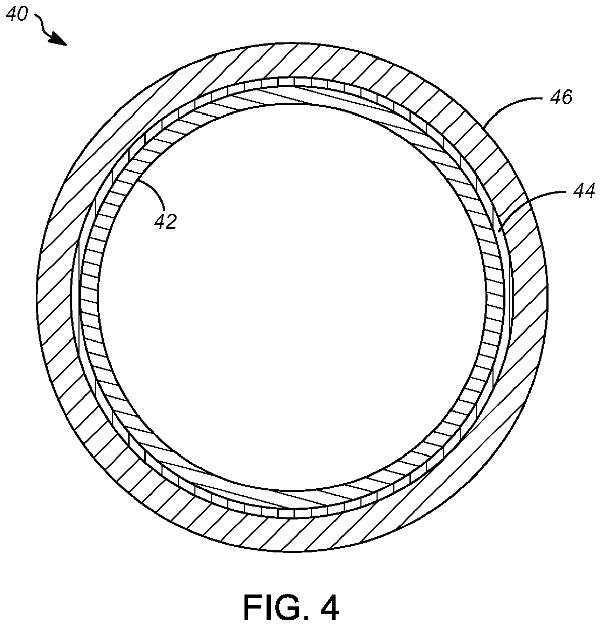

The multi-layer tube 40 in Fig. 4 is shown as a three-layer tube having an outer layer 46 of an aromatic polyamide PPA (6T or (T), a middle layer 44 of an adhesive and an inner layer 42 of a thermoplastic elastomer TPV. This construction utilizes the excellent coolant barrier property of TPV as an inner layer and excellent high temperature resistance of PPA(6T or 9T) as an outer layer.

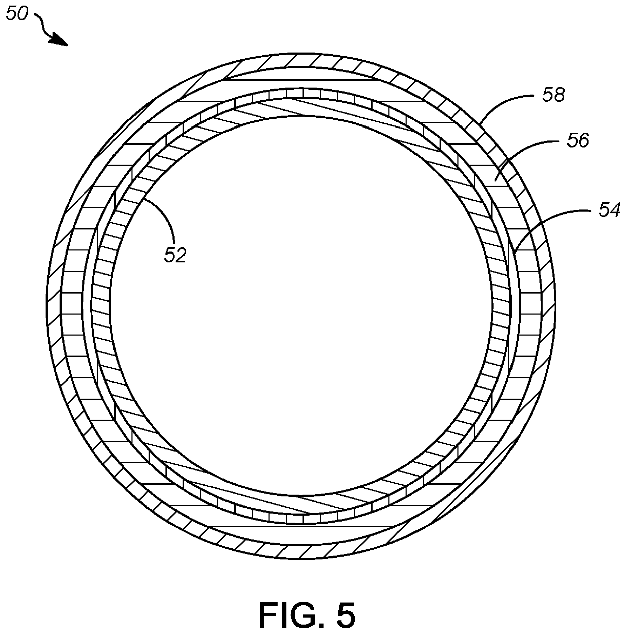

The multi-layer tube 50 of Fig. 5 is shown as a four-layer tube having an outer layer 58 of an aromatic polyamide PPA (6T or 9T), next to outer layer 58 is an intermediate layer 56 of an aliphatic polyamide, next to the intermediate layer 56 is a layer 54 of an adhesive material and then is found an inner layer 52 of a thermoplastic elastomer TPV.

The multi-layer tubes may be used for coolant transport for batteries and motors in both electrical and internal combustion engine vehicles. Typically, the coolant will be some type of glycol-based coolant, such as ethylene glycol. The tubes may typically encounter about 60°C to about 70°C continuous temperature for battery or motor cooling applications and about 80 to about 95°C peak temperature and about 1 to 4 bar maximum gage pressure. However, in some instances particularly in internal combustion engine vehicles it is desired to have a much greater range of temperatures from -40°C to 130°C and up to peak temperatures of 135°C.

The present disclosure is specific to such greater extremes in temperature. In addition, where possible, an intermediate layer is selected of a material that meets the requirements but is less expensive.

The layers in the multilayer tube may be co-extruded with the other layers during the extrusion process. The inner layer may comprise a material chosen for its coolant high temperature resistance, glycol permeation resistance, flexibility, connection seal-ability, hoop strength and insulating characteristics. The outer layer may comprise a material chosen for its structural qualities, such as abrasion resistance, hoop strength, impact resistance, chemical resistance or insulating characteristics, its extrudability and finish.

In an embodiment, the inner layer and the outer layer may be made of a melt processable, thermoplastic material. The inner layer and the outer layer may be made of the same or different thermoplastic materials. The thermoplastic material may be a thermoplastic material selected from the group consisting of homopolymers or co-polymers. The thermoplastic material may be selected from the group consisting of aliphatic or aromatic polyamides, thermal plastic elastomers or any effective adhesive.

A preferred thermoplastic elastomer (TPE) is a thermoplastic vulcanizate (TPV). A TPV is a vulcanized alloy of mostly fully cured ethylene-propylene diene monomer (EPDM) particles encapsulated in a polypropylene matrix. The polypropylene matrix comprises the primary phase and the ethylene-propylene diene monomer comprises the secondary phase. A preferred TPV should have a Shore A Hardness between about 55 to about 95, and preferably about 80 to about 90 based on ISO 868.

While it is within the scope of this disclosure to prepare a tubing material having a plurality of overlying layers of various thermoplastic materials, the tube 10, 20, 30, 40, 50 of the present disclosure generally has a maximum of five layers, inclusive of the adhesive layers. In the preferred embodiment, the tube 10, 20, 30, 40, 50 has two to four layers.

The tube 10, 20, 30, 40, 50 of the present invention is suitable for use in motor vehicles and may comprise an outer layer which is non-reactive with the external environment and can withstand various shocks, and changes in temperature, as well as exposure to various corrosive or degradative compounds to which it would be exposed through the normal course of operation of the motor vehicle. Suitable materials for use in the present invention may be composed of any melt-processible extrudable thermoplastic materials which are resistant to ultraviolet degradation, extreme changes in heat. The material of choice may also exhibit resistance to environmental hazards such as exposure to road salt, zinc chloride and CaCl₂, and resistance to degradation upon contact with materials such as engine oil and brake fluid.

The multi-layer tube 10, 20, 30, 40, 50 has strong properties necessary for automotive coolant transport. The tube 10, 20, 30, 40, 50 is expected to withstand impact of 1.5 J (2 ft-lbs) of force at -40°C and exhibits a coolant permeation resistance better than traditional EPDM tubes. The tube 10, 20, 30, 40, 50 is capable of being made into a corrugated tube without delamination and has adequate resistance to burst pressures that it will encounter during typical operation and also withstand vacuum pressure that it will encounter during manufacturing and testing. The tube also has sufficient seal-ability and hoop strength to enable it to couple with a barbed connection without leakage.

While the following is described in conjunction with specific embodiments, it will be understood that this description is intended to illustrate and not limit the scope of the preceding description and the appended claims.

Without further elaboration, it is believed that using the preceding description that one skilled in the art can utilize the present invention to its fullest extent and easily ascertain the essential characteristics of this invention, without departing from the spirit and scope thereof, to make various changes and modifications of the invention and to adapt it to various usages and conditions. The preceding preferred specific embodiments are, therefore, to be construed as merely illustrative, and not limiting the remainder of the disclosure in any way whatsoever, and that it is intended to cover various modifications and equivalent arrangements included within the scope of the appended claims.

In the foregoing, all temperatures are set forth in degrees Celsius and, all parts and percentages are by weight, unless otherwise indicated.

### SPECIFIC EMBODIMENTS

While the following is described in conjunction with specific embodiments, it will be understood that this description is intended to illustrate and not limit the scope of the preceding description and the appended claims.

A first embodiment of the disclosure is a multi-layer tube comprising:
an inner layer comprising a thermoplastic elastomer or an aromatic polyamide PPA;
and an outer layer comprising an aromatic polyamide wherein the multi-layer tube withstands temperatures up to 135°C in glycol heating and cooling systems. An embodiment of the disclosure is one, any or all of prior embodiments in this paragraph up through the first embodiment in this paragraph wherein said aromatic polyamide PPA is a 6T or 9T polymer. An embodiment of the disclosure is one, any or all of prior embodiments in this paragraph up through the first embodiment in this paragraph wherein the multi-layer tube is resistant to temperatures from -40°C to 130°C in continuous operation. An embodiment of the disclosure is one, any or all of prior embodiments in this paragraph up through the first embodiment in this paragraph wherein the multi-layer tube is capable of operation at pressures from about 1 to 4 bar. A n embodiment of the disclosure is one, any or all of prior embodiments in this paragraph up through the first embodiment in this paragraph wherein the outer layer has a temperature resistance of a peak of 135°C. An embodiment of the disclosure is one, any or all of prior embodiments in this paragraph up through the first embodiment in this paragraph wherein the inner layer comprises TPV or PPA polymer. An embodiment of the disclosure is one, any or all of prior embodiments in this paragraph up through the first embodiment in this paragraph wherein the outer layer comprises a PPA or PA polymer. An embodiment of the disclosure is one, any or all of prior embodiments in this paragraph up through the first embodiment in this paragraph wherein the multilayer tube withstands up to 130°C and 4 bar pressure in glycol heating and cooling systems. An embodiment of the disclosure is one, any or all of prior embodiments in this paragraph up through the first embodiment in this paragraph wherein the inner layer is TPV and the outer layer is PPA. An embodiment of the disclosure is one, any or all of prior embodiments in this paragraph up through the first embodiment in this paragraph further comprising an adhesive layer between the inner layer the outer layer. An embodiment of the disclosure is one, any or all of prior embodiments in this paragraph up through the first embodiment in this paragraph further comprising aa layer of PA between the inner layer the outer layer. An embodiment of the disclosure is one, any or all of prior embodiments in this paragraph up through the first embodiment in this paragraph further comprising an adhesive layer between a layer of PA and a layer of TPV.

Aspects of the present invention are set out in the following numbered clauses.
1. A multi-layer tube comprising:
   an inner layer comprising a thermoplastic elastomer or an aromatic polyamide PPA;
      and
   an outer layer comprising an aromatic polyamide wherein the multi-layer tube withstands temperatures up to 135°C in glycol heating and cooling systems.
2. The multi-layer tube of clause 1 wherein said aromatic polyamide PPA is a 6T or 9T polymer.
3. The multi-layer tube of clause 1 resistant to temperatures from -40°C to 130°C in continuous operation.
4. The multi-layer tube of clause 1 capable of operation at pressures from about 1 to 4 bar.
5. The multi-layer tube of clause 1 wherein said outer layer has a temperature resistance of a peak of 135°C.
6. The multi-layer tube of clause 1 wherein said inner layer comprises TPV or PPA polymer.
7. The multi-layer tube of clause 1 wherein said outer layer comprises a PPA or PA polymer.
8. The multi-layer tube of clause 1 wherein said multilayer tube withstands up to 130°C and 4 bar pressure in glycol heating and cooling systems.
9. The multi-layer tube of clause 1 wherein said inner layer is TPV and said outer layer is PPA.
10. The multi-layer tube of clause 8 further comprising an adhesive layer between said inner layer and said outer layer.
11. The multi-layer tube of clause 8 further comprising a layer of PA between said inner layer and said outer layer.
12. The multi-layer tube of clause 10 further comprising an adhesive layer between said layer of PA and said layer of TPV.

## Claims

1. A multi-layer tube comprising:
an inner layer comprising a thermoplastic elastomer or an aromatic polyamide PPA;
and
an outer layer comprising an aromatic polyamide wherein the multi-layer tube withstands temperatures up to 135°C in glycol heating and cooling systems.

2. The multi-layer tube of claim 1 wherein said aromatic polyamide PPA is a 6T or 9T polymer.

3. The multi-layer tube of claim 1 or claim 2 resistant to temperatures from -40°C to 130°C in continuous operation.

4. The multi-layer tube of any of claims 1 to 3 capable of operation at pressures from about 1 to 4 bar.

5. The multi-layer tube of any of claims 1 to 4 wherein said outer layer has a temperature resistance of a peak of 135°C.

6. The multi-layer tube of any of claims 1 to 5 wherein said inner layer comprises TPV or PPA polymer.

7. The multi-layer tube of any of claims 1 to 6 wherein said outer layer comprises a PPA or PA polymer.

8. The multi-layer tube of any of claims 1 to 7 wherein said multilayer tube withstands up to 130°C and 4 bar pressure in glycol heating and cooling systems.

9. The multi-layer tube of any of claims 1 to 8 wherein said inner layer is TPV and said outer layer is PPA.

10. The multi-layer tube of any of claims 1 to 9 further comprising an adhesive layer between said inner layer and said outer layer.

11. The multi-layer tube of any of claims 1 to 10 further comprising a layer of PA between said inner layer and said outer layer.

12. The multi-layer tube of claim 11, wherein said inner layer is TPV, further comprising an adhesive layer between said layer of PA and said layer of TPV.

13. The multi-layer tube of any of claims 1 to 12 installed in an automotive coolant transport system.

14. The multi-layer tube of any of claims 1 to 13 having sufficient hoop strength to be coupled with a barbed connection without leakage of coolant.

15. The multi-layer tube of any of claims 1 to 14 having an inner diameter of about 5 mm to about 50 mm and a wall thickness from about 0.9 to about 7 mm.
